(19)

Europäisches
Patentamt
European
Patent Office
Office européen
des brevets

(11) **EP 2 997 616 B1**

(12) **EUROPEAN PATENT SPECIFICATION**

(45) Date of publication and mention
of the grant of the patent:
**28.10.2020 Bulletin 2020/44**

(51) Int Cl.:
*H01M 4/88* (2006.01)      *H01M 4/92* (2006.01)
*C25C 1/20* (2006.01)

(21) Application number: **14726187.9**

(22) Date of filing: **14.05.2014**

(86) International application number:
**PCT/GB2014/051471**

(87) International publication number:
**WO 2014/184546 (20.11.2014 Gazette 2014/47)**

(54) **CATALYST**

**KATALYSATOR**

**CATALYSEUR**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.05.2013 US 201361823032 P**

(43) Date of publication of application:
**23.03.2016 Bulletin 2016/12**

(73) Proprietors:
- **Johnson Matthey Fuel Cells Limited
  London EC4A 4AB (GB)**
- **GM Global Technology Operations LLC
  Detroit, MI 48265-3000 (US)**

(72) Inventors:
- **BONASTRE, Alejandro Martinez
  Reading
  Berkshire RG1 6QE (GB)**
- **O'MALLEY, Rachel Louise
  Reading
  Berkshire RG4 9NH (GB)**
- **SPIKES, Geoffrey Hugh
  Caversham
  Berkshire RG4 8EB (GB)**
- **WAGNER, Frederick Tadeusz
  Fairport, New York 14450 (US)**

(74) Representative: **Scott, Philip McDermott et al
Johnson Matthey PLC
Gate 20
Orchard Road
Royston SG8 5HE (GB)**

(56) References cited:
**EP-A2- 0 827 225      WO-A2-2009/013540**

- **YUAN ZHANG ET AL: "Combinatorial screening for methanol oxidation catalysts in alloys of Pt, Cr, Co and V", JOURNAL OF POWER SOURCES, ELSEVIER SA, CH, vol. 206, 31 January 2012 (2012-01-31), pages 29-36, XP028403087, ISSN: 0378-7753, DOI: 10.1016/J.JPOWSOUR.2012.01.016 [retrieved on 2012-01-31]**
- **CAIXIA XU ET AL: "Nanoporous PtCo and PtNi alloy ribbons for methanol electrooxidation", INTERNATIONAL JOURNAL OF HYDROGEN ENERGY, ELSEVIER SCIENCE PUBLISHERS B.V., BARKING, GB, vol. 37, no. 14, 9 April 2012 (2012-04-09) , pages 10489-10498, XP028496968, ISSN: 0360-3199, DOI: 10.1016/J.IJHYDENE.2012.04.041 [retrieved on 2012-04-13]**

## Description

Field of the Invention

The present invention relates to an improved catalyst and in particular an improved catalyst for the oxygen reduction reaction at the cathode of a fuel cell.

Background of the Invention

A fuel cell is an electrochemical cell comprising two electrodes separated by an electrolyte. A fuel, e.g. hydrogen, an alcohol such as methanol or ethanol, or formic acid, is supplied to the anode and an oxidant, e.g. oxygen or air, is supplied to the cathode. Electrochemical reactions occur at the electrodes, and the chemical energy of the fuel and the oxidant is converted to electrical energy and heat. Electrocatalysts are used to promote the electrochemical oxidation of the fuel at the anode and the electrochemical reduction of oxygen at the cathode.

Fuel cells are usually classified according to the nature of the electrolyte employed. Often the electrolyte is a solid polymeric membrane, in which the membrane is electronically insulating but ionically conducting. In the proton exchange membrane fuel cell (PEMFC) the membrane is proton conducting, and protons, produced at the anode, are transported across the membrane to the cathode, where they combine with oxygen to form water.

A principal component of the PEMFC is the membrane electrode assembly (MEA), which is essentially composed of five layers. The central layer is the polymer ion-conducting membrane. On either side of the ion-conducting membrane there is an electrocatalyst layer, containing an electrocatalyst designed for the specific electrolytic reaction. Finally, adjacent to each electrocatalyst layer there is a gas diffusion layer. The gas diffusion layer must allow the reactants to reach the electrocatalyst layer and must conduct the electric current that is generated by the electrochemical reactions. Therefore the gas diffusion layer must be porous and electrically conducting.

Conventionally, the MEA can be constructed by a number of methods outlined hereinafter:

(i) The electrocatalyst layer may be applied to the gas diffusion layer to form a gas diffusion electrode. A gas diffusion electrode is placed on each side of an ion-conducting membrane and laminated together to form the five-layer MEA;
(ii) The electrocatalyst layer may be applied to both faces of the ion-conducting membrane to form a catalyst coated ion-conducting membrane. Subsequently, a gas diffusion layer is applied to each face of the catalyst coated ion-conducting membrane.
(iii) An MEA can be formed from an ion-conducting membrane coated on one side with an electrocatalyst layer, a gas diffusion layer adjacent to that electrocatalyst layer, and a gas diffusion electrode on the other side of the ion-conducting membrane.

Typically tens or hundreds of MEAs are required to provide enough power for most applications, so multiple MEAs are assembled to make up a fuel cell stack. Field flow plates are used to separate the MEAs. The plates perform several functions: supplying the reactants to the MEAs; removing products; providing electrical connections; and providing physical support.

Yuan Zhang and Paul J. McGinn studied thin film combinatorial sputter-deposited ternary Pt-Cr-V, Pt-Co-Cr, and quaternary Pt-Co-Cr-V catalysts for methanol electro-oxidation in direct methanol fuel cells, as published in "Combinatorial screening for methanol oxidation catalysts in alloys of Pt, Cr, Co and V", JOURNAL OF POWER SOURCES, vol. 206, pages 29-36, ISSN: 0378-7753, DOI: 10.1016/ J.JPOWSOUR.2012.01.016.

Summary of the Invention

Electrocatalysts for fuel oxidation and oxygen reduction are typically based on platinum or platinum alloyed with one or more other metals. The platinum or platinum alloy catalyst can be in the form of unsupported nanometre sized particles (for example metal blacks) or can be deposited as discrete very high surface area nanoparticles onto a support material (a supported catalyst). Electrocatalysts can also be in the form of coatings or extended films deposited onto a support material. There is a continual search for catalysts, particularly oxygen reduction catalysts, that have improved activity and/or stability, and that therefore utilise the expensive platinum catalyst more effectively. This enables the MEA performance to be increased or the loading (and therefore cost) of the catalyst employed in the MEA to be decreased, or a combination of both benefits.

A wide range of catalysts concepts, such as Pt binary alloys, Pt monolayer catalysts, Pt skin catalysts, and nanostructured thin-film (NSTF) catalysts have been investigated over the last decade. Another approach to high activity catalysts reported in recent years is that of the de-alloying Pt-M concept - materials obtained by the synthesis of base-metal (M) rich particles which are subjected to a selective leaching process of the less noble-metal from the particle surface. The resulting platinum-rich shells of the de-alloyed electrocatalyst particles exhibit compressive strain which, via electronic effects, leads to a highly active oxygen reduction reaction (ORR) catalyst. Promising performance in both rotating disk electrodes (RDE) and MEA experiments have been reported. However, there remains a need to design further improved catalysts with better control over the structure of the platinum-rich shells and the underlying core materials to enable further enhancement of the activity and stability of such catalysts.

It is therefore the object of the present invention to provide an improved catalyst, and in particular an improved catalyst for the oxygen reduction reaction at the cathode of a fuel cell. In particular, the improved catalyst demonstrates very high activity and stability.

Accordingly, a first aspect of the present invention provides a de-alloyed catalyst of formula PtXY, wherein X is selected from the group consisting of Ni, Co and Cr; and Y is selected from the group consisting of Zn, Al, Sn, Be, Pb, Ga, V, In, Y, Sr and Ti; characterised in that the total atomic composition relative to Pt of X and Y at the surface of the de-alloyed catalyst as determined from X-ray photoelectron spectroscopy is between 20 and 99% lower than the total atomic composition relative to Pt of X and Y in the bulk of the de-alloyed catalyst, wherein the X-ray photoelectron spectroscopy uses monochromised aluminium K$\alpha$ radiation with a 650 $\mu$m spot size (i.e. the total atomic composition of X and Y at the surface of the de-alloyed catalyst is fractionally between 0.8 and 0.01 of the total atomic composition of X and Y in the bulk of the de-alloyed catalyst).

The invention further provides a process for preparing a de-alloyed catalyst of formula PtXY, wherein X is selected from the group consisting of Ni, Co and Cr; and Y is selected from the group consisting of Zn, Al, Sn, Be, Pb, Ga, V, In, Y, Sr and Ti; characterised in that the total atomic composition relative to Pt of X and Y at the surface of the de-alloyed catalyst as determined from X-ray photoelectron spectroscopy is between 20 and 99% lower than the total atomic composition relative to Pt of X and Y in the bulk of the de-alloyed catalyst, wherein the X-ray photoelectron spectroscopy uses monochromised aluminium K$\alpha$ radiation with a 650 $\mu$m spot size; said process comprising the steps of:

(i) preparing a catalyst alloy precursor of formula PtXY wherein the atomic percentage of the total of X and Y in the catalyst alloy precursor is at least 50 atomic percent;
(ii) subjecting the catalyst alloy precursor to conditions sufficient to leach a portion of X and/or Y from the catalyst alloy precursor to provide the de-alloyed catalyst.

The invention further provides a catalyst layer, gas diffusion electrode, catalysed membrane, catalysed transfer substrate and membrane electrode assembly.

Detailed Description of the Invention

The invention provides a de-alloyed catalyst of formula PtXY, wherein X is selected from the group consisting of Ni, Co and Cr; and Y is selected from the group consisting of Zn, Al, Sn, Be, Pb, Ga, V, In, Y, Sr and Ti; characterised in that the total atomic composition relative to Pt of X and Y at the surface of the de-alloyed catalyst as determined from X-ray photoelectron spectroscopy is between 20 and 99% lower than the total atomic composition relative to Pt of X and Y in the bulk of the de-alloyed catalyst (i.e. the total atomic composition relative to Pt of X and Y at the surface of the de-alloyed catalyst is fractionally between 0.8 and 0.01 of the total atomic composition relative to Pt of X and Y in the bulk of the de-alloyed catalyst).

Suitably, X is Ni or Co; preferably Ni.

Suitably Y is Zn, Al, V or Ti; more suitably Zn or Al; preferably Zn.

In the present context, total atomic composition of X and Y in the bulk and the surface of the de-alloyed catalyst is the number of atoms or moles of X and Y relative to a constant Pt level; any additional non-metallic components (e.g. carbon) are not taken into consideration.

Reference to the atomic percentage in the bulk of the de-alloyed catalyst refers to the atomic percentage in the total mass of the catalyst (excluding any catalyst support material). The atomic percentage of each of Pt, X and Y in the bulk phase of the de-alloyed catalyst is measured by standard procedures known to those skilled in the art; for example, by wet chemical analysis: digestion of the sample followed by inductively-coupled plasma emission spectroscopy. The bulk phase of the de-alloyed catalyst of the invention suitably comprises an atomic percentage of X and Y (total) of 20 to 70 atomic percent, suitably 20-60 atomic percent, suitably 25 to 55 atomic percent and preferably 30 to 55 atomic percent.

The atomic percentage of each of Pt, X and Y at the surface of the de-alloyed catalyst is determined by X-ray photoelectron spectroscopy. XPS analysis was conducted using a Thermo Escalab 250. The radiation used was monochromised aluminium $K_a$ radiation with a 650 micron spot size. Charge compensation was provided by the in-lens electron flood gun at a 2 eV setting and the "401" unit for "zero energy" argon ions.

The total atomic composition in the bulk and at the surface is determined from the atomic percentage measurements above and normalised to a constant Pt level.

The total atomic composition relative to Pt of X and Y is less at the surface of the de-alloyed catalyst than in the bulk of the de-alloyed catalyst. Suitably, the total atomic composition relative to Pt of X and Y at the surface is between 20 and 99%, suitably between 40 and 80% and preferably between 45 and 75% lower than the total atomic composition relative to Pt of X and Y in the bulk of the de-alloyed catalyst. The amount of depletion of the total of X and Y at the surface of the de-alloyed catalyst compared to the bulk can be calculated from the atomic compositions using the formula:

$$\frac{(X+Y)_{bulk} - (X+Y)_{surface}}{(X+Y)_{bulk}} \times 100$$

The de-alloyed catalyst may be unsupported or deposited on a support, and is suitably deposited on a conductive high surface area support material, for example a conductive carbon, such as an oil furnace black, extra-conductive black, acetylene black or heat-treated or graphitised versions thereof, or carbon nanofibres or nanotubes. It may also be possible to use a non-conducting support material, such as inorganic metal oxide particles if the de-alloyed catalyst is deposited sufficiently well over the surface to provide the required electronic conductivity or if further additives are included to provide the necessary conductivity. The de-alloyed catalyst is preferably dispersed on a conductive carbon material. Exemplary carbons include Akzo Nobel Ketjen EC300J (or heat treated or graphitised versions thereof), Cabot Vulcan XC72R (or heat treated or graphitised versions thereof) and Denka Acetylene Black.

The de-alloyed catalyst of the invention is prepared by preparing a catalyst alloy precursor comprising Pt, X and Y and subjecting the catalyst alloy precursor to processes under which X and/or Y are leached from the catalyst alloy precursor to give the de-alloyed catalyst. Suitable leaching processes include: contacting the catalyst alloy precursor with an acidic solution, such as 0.5M sulphuric acid to solubilize a portion of X and/or Y; subjecting the catalyst precursor alloy to an electrochemical reaction, which could be performed *in situ* (e.g. performing electrochemical cycling of a gas diffusion electrode or MEA comprising the catalyst alloy precursor); and heating in a controlled gaseous atmosphere, such as, but not limited to, nitrogen, oxygen, hydrogen, carbon monoxide and nitrogen monoxide. The leaching process results in the atomic percentage of X + Y (total) in the bulk of the de-alloyed catalyst of the invention being considerably less than in the catalyst alloy precursor.

The catalyst alloy precursor suitably comprises an atomic percentage of X + Y (total) of 50 to 90 atomic percent, suitably 60 to 90 atomic percent, preferably 60 to 85 atomic percent in the bulk of the catalyst alloy precursor.

The catalyst alloy precursor may be prepared by firstly making up a dispersion of a pre-formed supported platinum catalyst (e.g. Pt/C) in a suitable solvent (e.g. water) and to this adding salts (e.g. nitrates) of the second and third metals (X and Y) dissolved in suitable solvents (e.g. water) with appropriate mixing. The second and third metal solutions may be added simultaneously or sequentially in either order. Once impregnation of the metals onto the Pt/C catalyst is complete, the formed material is isolated, dried and then annealed in an inert atmosphere at elevated temperatures to form the catalyst alloy precursor.

Alternatively, after deposition of one of X and Y, the material formed is dried and annealed. The annealed material is then redispersed in a suitable solvent (e.g. water) and a solution of a salt of the other metal is added with appropriate mixing. Once deposition of the third metal is complete, the alloy precursor material is dried and annealed.

Whether the metals are deposited simultaneously or sequentially, the exact annealing conditions will depend on the particular metals used for X and Y. The selection of the actual process and conditions is within the capability of the skilled person.

Alternatively, any other general preparation methods known to those skilled in the art can be adapted to make the catalyst alloy precursor, such methods including colloidal deposition or controlled hydrolysis deposition methods, such method including co-deposition or sequential deposition of the alloying metals.

A second aspect of the invention provides a de-alloyed catalyst of formula PtXY, wherein X is selected from the group consisting of Ni, Co and Cr; and Y is selected from the group consisting of Zn, Al, Sn, Be, Pb, Ga, V, In, Y, Sr and Ti; characterised in that the total atomic composition relative to Pt of X and Y at the surface of the de-alloyed catalyst as determined from X-ray photoelectron spectroscopy is between 20 and 99% lower than the total atomic composition relative to Pt of X and Y in the bulk of the de-alloyed catalyst; said de-alloyed catalyst obtainable by a process comprising the steps of:

> (i) preparing a catalyst alloy precursor of formula PtXY;
> (ii) subjecting the catalyst alloy precursor to conditions sufficient to leach a portion of X and/or Y from the catalyst alloy precursor to provide the de-alloyed catalyst.

The de-alloyed catalyst of the invention has use in a catalyst layer, for example for use in a gas diffusion electrode, preferably the cathode, of an electrochemical cell, such as a fuel cell (for example are PEMFC or a phosphoric acid fuel cell (PAFC)). Thus, there is further provided a catalyst layer comprising the de-alloyed catalyst of the invention. The catalyst layer may be prepared by a number of methods known to those skilled in the art, for example by preparation of an ink and applying the ink to a membrane, gas diffusion layer or transfer substrate by standard methods such as printing, spraying, knife over roll, powder coating, electrophoresis etc.

The catalyst layer may also comprise additional components. Such components include, but are not limited to: a proton conductor (e.g. a polymeric or aqueous electrolyte, such as a perfluorosulphonic acid (PFSA) polymer (e.g. Nafion®), a hydrocarbon proton conducting polymer (e.g. sulphonated polyarylenes) or phosphoric acid); a hydrophobic (a polymer such as PTFE or an inorganic solid with or without surface treatment) or a hydrophilic (a polymer or an inorganic solid, such as an oxide) additive to control water transport. In addition the catalyst layer may also comprise a further catalytic material, which may or may not have the same function as the de-alloyed catalyst of the invention. For example, where the de-alloyed catalyst of the invention is employed as an oxygen reduction catalyst, the additional catalytic material may be added to mitigate the degradation caused by repeated start-up/shut-down cycles by catalysing the oxygen evolution reaction (and, for example, comprise a ruthenium and/or iridium based metal oxide). In a further example, the additional catalyst may promote the decomposition of hydrogen peroxide (and for example comprise ceria or manganese dioxide).

The invention further provides a gas diffusion electrode comprising a gas diffusion layer (GDL) and a catalyst layer according to the present invention. Typical GDLs are suitably based on conventional non-woven carbon fibre gas diffusion substrates such as rigid sheet carbon fibre papers (e.g. the TGP-H series of carbon fibre papers available from Toray Industries Inc., Japan) or roll-good carbon fibre papers (e.g. the H2315 based series available from Freudenberg FCCT KG, Germany; the Sigracet® series available from SGL Technologies GmbH, Germany; the AvCarb® series available from Ballard Material Products, United States of America; or the N0S series available from CeTech Co., Ltd. Taiwan), or on woven carbon fibre cloth substrates (e.g. the SCCG series of carbon cloths available from the SAATI Group, S.p.A., Italy; or the W0S series available from CeTech Co., Ltd, Taiwan). For many PEMFC (including direct methanol fuel cell (DMFC)) applications the non-woven carbon fibre paper, or woven carbon fibre cloth substrates are typically modified with a hydrophobic polymer treatment and/or application of a microporous layer comprising particulate material either embedded within the substrate or coated onto the planar faces, or a combination of both to form the gas diffusion layer. The particulate material is typically a mixture of carbon black and a polymer such as polytetrafluoroethylene (PTFE). Suitably the GDLs are between 100 and $400\mu m$ thick. Preferably there is a layer of particulate material such as carbon black and PTFE on the face of the GDL that contacts the catalyst layer.

In the PEMFC, the catalyst layer of the invention may be deposited onto one or both faces of the proton conducting membrane to form a catalysed membrane. In a further aspect the present invention provides a catalysed membrane comprising a proton conducting membrane and a catalyst layer of the invention.

The membrane may be any membrane suitable for use in a PEMFC, for example the membrane may be based on a perfluorinated sulphonic acid material such as Nafion® (DuPont), Aquivion® (Solvay Plastics), Flemion® (Asahi Glass) and Aciplex® (Asahi Kasei); these membranes may be used unmodified, or may be modified to improve the high temperature performance, for example by incorporating an additive. Alternatively, the membrane may be based on a sulphonated hydrocarbon membrane such as those available from FuMA-Tech GmbH as the fumapem® P, E or K series of products, JSR Corporation, Toyobo Corporation, and others. The membrane may be a composite membrane, containing the proton-conducting material and other materials that confer properties such as mechanical strength. For example, the membrane may comprise an expanded PTFE substrate. Alternatively, the membrane may be based on polybenzimidazole doped with phosphoric acid and include membranes from developers such as BASF Fuel Cell GmbH, for example the Celtec®-P membrane which will operate in the range 120°C to 180°C.

In a further embodiment of the invention, the substrate onto which the catalyst layer of the invention is applied is a transfer substrate. Accordingly, a further aspect of the present invention provides a catalysed transfer substrate comprising transfer substrate and a catalyst layer of the invention. The transfer substrate may be any suitable transfer substrate known to those skilled in the art but is preferably a polymeric material such as polytetrafluoroethylene (PTFE), polyimide, polyvinylidene difluoride (PVDF), or polypropylene (especially biaxially-oriented polypropylene, BOPP) or a polymer-coated paper such as polyurethane coated paper. The transfer substrate could also be a silicone release paper or a metal foil such as aluminium foil. The catalyst layer of the invention may then be transferred to a GDL or membrane by techniques known to those skilled in the art.

A yet further aspect of the invention provides a membrane electrode assembly comprising a catalyst layer, electrode or catalysed membrane according to the invention. The MEA may be made up in a number of ways including, but not limited to:

(i) a proton conducting membrane may be sandwiched between two electrodes (one anode and one cathode), at least one of which is a gas diffusion electrode according to the present invention;
(ii) a catalysed membrane coated on one side only by a catalyst layer may be sandwiched between (a) a gas diffusion layer and a gas diffusion electrode, the gas diffusion layer contacting the side of the membrane coated with the catalyst layer, or (b) two electrodes, and wherein at least one of the catalyst layer and the electrode(s) comprises a catalyst layer according to the present invention;

(iii) a catalysed membrane coated on both sides with a catalyst layer may be sandwiched between (a) two gas diffusion layers, (b) a gas diffusion layer and a gas diffusion electrode or (c) two electrodes, and wherein at least one of the catalyst layer and the electrode(s) comprises a catalyst layer according to the present invention.

The MEA may further comprise components that seal and/or reinforce the edge regions of the MEA for example as described in WO2005/020356. The MEA is assembled by conventional methods known to those skilled in the art.

The de-alloyed catalyst of the invention may be used in a number of applications, for example in a PEMFC and in particular at the cathode for the oxygen reduction reaction. The PEMFC could be operating on hydrogen or a hydrogen-rich fuel at the anode or could be fuelled with a hydrocarbon fuel such as methanol. The de-alloyed catalyst of the invention may also be used at the anode of the PEMFC operating on these fuels. Alternatively, the de-alloyed catalyst of the invention may be used at the cathode or anode of a PAFC.

The de-alloyed catalyst of the invention may also be used at the cathode or anode of fuel cells in which the membranes use charge carriers other than protons, for example OH$^-$conducting membranes such as those available from Tokuyama Soda Ltd, FuMA-Tech GmbH. The de-alloyed catalyst of the invention may also be used in other low temperature fuel cells that employ liquid ion conducting electrolytes, such as aqueous acids and alkaline solutions.

Accordingly, a further aspect of the invention provides a fuel cell, preferably a proton exchange membrane fuel cell or a phosphoric acid fuel cell or an anion exchange membrane fuel cell, comprising a de-alloyed catalyst, catalyst layer, a gas diffusion electrode, a catalysed membrane or an MEA of the invention.

A third aspect of the invention provides a process for preparing a de-alloyed catalyst of formula PtXY, wherein X is selected from the group consisting of Ni, Co and Cr; and Y is selected from the group consisting of Zn, Al, Sn, Be, Pb, Ga, V, In, Y, Sr and Ti; characterised in that the total atomic composition relative to Pt of X and Y at the surface of the de-alloyed catalyst as determined from X-ray photoelectron spectroscopy is between 20 and 99% lower than the total atomic composition relative to Pt of X and Y in the bulk of the de-alloyed catalyst; said process comprising the steps of:

(i) preparing a catalyst alloy precursor of formula PtXY wherein the atomic percentage of the total of X and Y in the catalyst alloy precursor is at least 50 atomic percent;

(ii) subjecting the catalyst alloy precursor to conditions sufficient to leach a portion of X and/or Y from the catalyst alloy precursor to provide the de-alloyed catalyst.

The present invention will now be further described with reference to the following examples.

General method for Examples 1 to 4 and Comparative Example 1: A pre-formed 30% Pt/C catalyst was prepared using a method analogous to the general method of preparation of carbon supported platinum catalyst described in WO2013/045894. The Pt/C catalyst was dispersed in water. A solution of a salt of the 'X' metal in water was added in aliquots and mixed to ensure a homogeneous dispersion. Once deposition was complete the PtX catalyst was recovered, dried and annealed in an inert atmosphere to alloy the platinum and 'X' metal. The PtX catalyst was redispersed in water and a solution of a salt of the 'Y' metal in water was added in aliquots with mixing to ensure homogeneous dispersion. Once deposition of the 'Y' metal was complete the PtXY catalyst was dried and annealed in an inert atmosphere to give the catalyst alloy precursor (or the final catalyst alloy in the case of Comparative Example 1).

The catalyst alloy precursors for each of Examples 1 to 4 were then treated with 0.5M H$_2$SO$_4$ at room temperature for 24 hours to leach out at least a portion of the X and/or Y metals and form the de-alloyed catalyst of Examples 1 to 4 respectively.

Example 1: PtNi$_{2.5}$Zn$_{0.5}$ (precursor nominal)

Pt/C = 10.0 g (2.8 g, 0.0144 mol Pt)
Ni(NO$_3$)$_2$.6H$_2$O = 10.45 g (2.12 g, 0.0359 mol Ni)
Water = 22 ml
First annealing temperature: 1000°C
Zn(NO$_3$)$_2$. 6H$_2$O = 2.155 g (0.47 g, 0.0072 mol Zn)
Water = 20 ml
Second annealing temperature: up to 800°C

Example 2: PtNi$_2$Zn (precursor nominal)

Pt/C = 5.0 g (1.4 g, 0.0072 mol Pt)

Ni(NO$_3$)$_2$.6H$_2$O = 4.18 g (0.840 g, 0.0144 mol Ni)
Water = 11.5 ml
First annealing temperature: 1000°C
Zn(NO$_3$)$_2$. 6H$_2$O = 2.03 g (0.445 g, 0.0068 mol Zn)
Water = 11.5 ml
Second annealing temperature: up to 800°C

Example 3: PtCo$_2$Zn (precursor nominal)

Pt/C = 23 g (6.44 g, 0.033 mol Pt)
Co(NO$_3$)$_2$.6H$_2$O = 19.2 g (3.86 g, 0.066 mol Ni)
Water = 53 ml
First Annealing Temperature: 1000 °C
Zn(NO$_3$)$_3$.6H$_2$O = 4.03 g (0.89 g, 0.0136 mol Zn)
Water = 11.5 ml
Second Annealing Temperature: 800 °C

Example 4: PtNi$_2$Al (precursor nominal)

Pt/C = 50 g (14 g, 0.071 mol Pt)
Ni(NO$_3$)$_2$.6H$_2$O = 40.6 g (8.40 g, 0.14 mol Ni)
Water = 115 ml
First Annealing Temperature: 1000 °C
Al(NO$_3$)$_3$.9H$_2$O = 2.55 g (2.55 g, 0.0068 mol Al)
Water = 7 ml
Second Annealing Temperature: 800 °C

Comparative Example 1: PtNi$_2$Zn (nominal)

Pt/C = 10.0 g (2.8 g, 0.0144 mol Pt)
Ni(NO$_3$)$_2$.6H$_2$O = 0.975 g (0.196 g, 0.0033 mol Ni)
Water = 22 ml
First annealing temperature: 1000°C
Zn(NO$_3$)$_2$. 6H$_2$O = 0.7 g (0.152 g, 0.0023 mol Zn)
Water = 9 ml
Second annealing temperature: up to 800°C

The atomic percentages of the final de-alloyed catalysts in the bulk of each of Examples 1 to 4 and of Comparative Example 1 was measured by wet chemical analysis digestion of the sample followed by inductively-coupled plasma emission spectroscopy and the atomic percentages at the surface of each of Examples 1 to 4 and Comparative Example 1 was determined by X-ray photoelectron spectroscopy. The atomic compositions relative to a constant Pt level were calculated. The results are shown in Table 1.

The oxygen reduction activity (i.e. mass activity) of Example 1 and 2 and Comparative Example 1 is derived from the iR-free voltage at 0.9 V. This was measured in a 50 cm$^2$ MEA comprising a standard Pt/C anode and a thin, mechanically reinforced PFSA membrane. The MEA was operated at 80°C, under fully humidified (i.e. 100% RH) H$_2$/O$_2$ (anode stoichiometry 2; cathode stoichiometry 9.5) with a total outlet pressure of 150 KPa; (per Gasteiger et al. Applied Catalysis B: Environmental, 56, (2005) 9-35). Prior to the measurement, the oxidant gas to the cathode was stopped and its voltage was allowed to decrease below 0.1 V in order to reduce Pt surface oxide and improve test reproducibility.

Table 1

| Example | Precursor atomic composition | | Final catalyst bulk composition | | Final catalyst surface composition | Percentage depletion of atomic composition of (X+Y) at surface compared to bulk | Mass Activity, (A/mg$_{Pt}$) |
|---|---|---|---|---|---|---|---|
| | Atomic percentage | Atomic composition | Atomic percentage | Atomic composition | Atomic composition | | |
| Example 1 | Pt(27.7%) Ni(61.7%) Zn(10.6%) | Pt$_{3.0}$Ni$_{6.6}$Zn$_{1.2}$ | Pt(51.7%) Ni(41.4%) Zn(6.9%) | Pt$_{3.0}$Ni$_{2.33}$Zn$_{0.33}$ | Pt$_{3.0}$Ni$_{0.38}$Zn$_{0.35}$ | 73% | 0.61 |
| Example 2 | Pt(25.5%) Ni(47.1%) Zn(27.4%) | Pt$_{3.0}$Ni$_{5.7}$Zn$_{3.3}$ | Pt(62.5%) Ni(16.7%) Zn(20.8%) | Pt$_{3.0}$Ni$_{0.69}$Zn$_{0.96}$ | Pt$_{3.0}$Ni$_{0.1}$Zn$_{1.2}$ | 21% | 0.61 |
| Example 3 | Pt(25.2%) Co(51.7%) Zn(23.1 %) | Pt$_{3.0}$Co$_{6.2}$Zn$_{2.8}$ | Pt(69.2%) Co(7.3%) Zn(23.5%) | Pt$_{3.0}$Co$_{0.3}$Zn$_{1.0}$ | Pt$_{3.0}$Co$_{0}$Zn$_{0.7}$ | 46% | 0.56 |
| Example 4 | Pt(27.4%) Ni(47.7%) Al(25.0%) | Pt$_{3.0}$Ni$_{5.2}$Al$_{2.7}$ | Pt(47.3%) Ni(48.2%) Al(4.5%) | Pt$_{3.0}$Ni$_{3.06}$Al$_{0.3}$ | Pt$_{3.0}$Ni$_{0.28}$Al$_{0.58}$ | 74% | 0.51 |
| Comparative Example 1 | | | Pt(65.2%) Ni(13.0%) Zn(21.8%) | Pt$_{3.0}$Ni$_{0.61}$Zn$_{0.95}$ | Pt$_{3.0}$Ni$_{0.19}$Zn$_{1.12}$ | 16% | 0.32 |

EP 2 997 616 B1

8

It can be seen from the Table 1 that Examples 1 to 4 of the invention have a surface atomic composition that is considerably depleted in Ni+Zn, Co+Zn and Ni+Al compared to the bulk composition. In contrast, Comparative Example 1 has a surface composition that is only slightly depleted in Ni+Zn compared to the bulk composition.

Furthermore, it can be seen that the bulk compositions of Example 2 and Comparative Examples 1 are essentially similar ($Pt_{3.0}Ni_{0.69}Zn_{0.96}$ and $Pt_{3.0}Ni_{0.61}Zn_{0.95}$ respectively). However, the mass activity of Example 2, prepared by a leaching process, is almost twice that of Comparative Example 1 which was prepared by a standard process. It can therefore be seen that the de-alloyed catalysts of the present invention are considerably more active than standard catalysts of similar bulk composition prepared by a conventional process.

**Claims**

1. A de-alloyed catalyst of formula PtXY, wherein X represents a second metal which is selected from the group consisting of Ni, Co and Cr; and Y represents a third metal which is selected from the group consisting of Zn, Al, Sn, Be, Pb, Ga, V, In, Y, Sr and Ti; **characterised in that** the total atomic composition relative to Pt of X and Y at the surface of the de-alloyed catalyst as determined from X-ray photoelectron spectroscopy is between 20 and 99% lower than the total atomic composition relative to Pt of X and Y in the bulk of the de-alloyed catalyst, wherein the X-ray photoelectron spectroscopy uses monochromised aluminium K$\alpha$ radiation with a 650 $\mu$m spot size.

2. A de-alloyed catalyst according to claim 1, wherein X is Ni or Co.

3. A de-alloyed catalyst according to claim 2, wherein X is Ni.

4. A de-alloyed catalyst according to any one of claims 1 to 3, wherein Y is Zn, Al, V or Ti.

5. A de-alloyed catalyst according to claim 4, wherein Y is Zn.

6. A de-alloyed catalyst according to any preceding claim wherein the total atomic percentage of X and Y in the bulk is 20-70 atomic percent.

7. A de-alloyed catalyst according to claim 6, wherein the total atomic percentage of X and Y in the bulk is 30 to 55 atomic percent.

8. A de-alloyed catalyst according to any preceding claim wherein the total atomic composition relative to Pt of X and Y at the surface is between 45 and 75% lower than the total atomic composition relative to Pt of X and Y in the bulk of the de-alloyed catalyst.

9. A process for preparing a de-alloyed catalyst of formula PtXY, wherein X represents a second metal which is selected from the group consisting of Ni, Co and Cr; and Y represents a third metal which is selected from the group consisting of Zn, Al, Sn, Be, Pb, Ga, V, In, Y, Sr and Ti; **characterised in that** the total atomic composition relative to Pt of X and Y at the surface of the de-alloyed catalyst as determined from X-ray photoelectron spectroscopy is between 20 and 99% less than the total atomic composition relative to Pt of X and Y in the bulk of the de-alloyed catalyst, wherein the X-ray photoelectron spectroscopy uses monochromised aluminium K$\alpha$ radiation with a 650 $\mu$m spot size; said process comprising the steps of:

   (i) preparing a catalyst alloy precursor of formula PtXY wherein the atomic percentage of the total of X and Y in the catalyst alloy precursor is at least 50 atomic percent;
   (ii) subjecting the catalyst alloy precursor to conditions sufficient to leach a portion of X and/or Y from the catalyst alloy precursor to provide the de-alloyed catalyst.

10. A catalyst layer comprising a de-alloyed catalyst according to any one of claims 1 to 8, or comprising a de-alloyed catalyst prepared according to claim 9.

11. A gas diffusion electrode comprising a gas diffusion layer and a catalyst layer according to claim 10.

12. A catalysed membrane comprising a proton conducting membrane and a catalyst layer according to claim 10.

13. A catalysed transfer substrate comprising a transfer substrate and a catalyst layer according to claim 10.

14. A membrane electrode assembly comprising a de-alloyed catalyst according to any one of claims 1 to 8, a catalyst layer according to claim 10, a gas diffusion electrode according to claim 11 or a catalyst membrane according to claim 12.

**Patentansprüche**

1. Entlegierter Katalysator der Formel PtXY, wobei X für ein zweites Metall steht, das aus der Gruppe bestehend aus Ni, Co und Cr ausgewählt ist; und Y für ein drittes Metall steht, das aus der Gruppe bestehend aus Zn, Al, Sn, Be, Pb, Ga, V, In, Y, Sr und Ti ausgewählt ist; **dadurch gekennzeichnet, dass** die atomare Gesamtzusammensetzung von X und Y in Bezug auf Pt an der Oberfläche des entlegierten Katalysators, wie aus einer Röntgenphotoelektronenspektroskopie bestimmt, zwischen 20 und 99 % niedriger als die atomare Gesamtzusammensetzung von X und Y in Bezug auf Pt in der Masse des entlegierten Katalysators ist, wobei die Röntgenphotoelektronenspektroskopie monochromatisierte Aluminium-$\kappa\alpha$-Strahlung mit einer Spotgröße von 650 $\mu$m verwendet.

2. Entlegierter Katalysator nach Anspruch 1, wobei X Ni oder Co ist

3. Entlegierter Katalysator nach Anspruch 2, wobei X Ni ist.

4. Entlegierter Katalysator nach einem der Ansprüche 1 bis 3, wobei Y Zn, Al, V oder Ti ist.

5. Entlegierter Katalysator nach Anspruch 4, wobei Y Zn ist.

6. Entlegierter Katalysator nach einem vorhergehenden Anspruch, wobei der Gesamtatomprozentanteil von X und Y in der Masse 20-70 Atomprozent beträgt.

7. Entlegierter Katalysator nach Anspruch 6, wobei der Gesamtatomprozentanteil von X und Y in der Masse 30 bis 55 Atomprozent beträgt.

8. Entlegierter Katalysator nach einem vorhergehenden Anspruch, wobei die atomare Gesamtzusammensetzung von X und Y in Bezug auf Pt an der Oberfläche zwischen 45 und 75 % niedriger als die atomare Gesamtzusammensetzung von X und Y in Bezug auf Pt in der Masse des entlegierten Katalysators ist.

9. Verfahren zur Herstellung eines entlegierten Katalysators der Formel PtXY, wobei X für ein zweites Metall steht, das aus der Gruppe bestehend aus Ni, Co und Cr ausgewählt ist; und Y für ein drittes Metall steht, das aus der Gruppe bestehend aus Zn, Al, Sn, Be, Pb, Ga, V, In, Y, Sr und Ti ausgewählt ist; **dadurch gekennzeichnet, dass** die atomare Gesamtzusammensetzung von X und Y in Bezug auf Pt an der Oberfläche des entlegierten Katalysators, wie aus einer Röntgenphotoelektronenspektroskopie bestimmt, zwischen 20 und 99 % niedriger als die atomare Gesamtzusammensetzung von X und Y in Bezug auf Pt in der Masse des entlegierten Katalysators ist, wobei die Röntgenphotoelektronenspektroskopie monochromatisierte Aluminium-$\kappa\alpha$-Strahlung mit einer Spotgröße von 650 $\mu$m verwendet; wobei das Verfahren die folgenden Schritte umfasst:

(i) Herstellen eines Katalysatorlegierungsvorläufers der Formel PtXY, wobei der Atomprozentanteil der Summe von X und Y in dem Katalysatorlegierungsvorläufer mindestens 50 Atomprozent beträgt;
(ii) Unterziehen des Katalysatorlegierungsvorläufers gegenüber Bedingungen, die dazu ausreichen, einen Teil von X und/oder Y aus dem Katalysatorlegierungsvorläufer abzulegieren, um den entlegierten Katalysator bereitzustellen.

10. Katalysatorschicht, die einen entlegierten Katalysator nach einem der Ansprüche 1 bis 8 umfasst oder einen nach Anspruch 9 hergestellten entlegierten Katalysator umfasst.

11. Gasdiffusionselektrode, die eine Gasdiffusionsschicht und eine Katalysatorschicht nach Anspruch 10 umfasst.

12. Katalysierte Membran, die eine protonenleitende Membran und eine Katalysatorschicht nach Anspruch 10 umfasst.

13. Katalysiertes Transfersubstrat, das ein Transfersubstrat und eine Katalysatorschicht nach Anspruch 10 umfasst.

14. Membran-Elektroden-Einheit, die einen entlegierten Katalysator nach einem der Ansprüche 1 bis 8, eine Katalysatorschicht nach Anspruch 10, eine Gasdiffusionselektrode nach Anspruch 11 oder eine Katalysatormembran nach Anspruch 12 umfasst.

**Revendications**

1. Catalyseur obtenu par corrosion sélective de formule PtXY, dans laquelle X représente un deuxième métal qui est choisi dans le groupe constitué par Ni, Co et Cr ; et Y représente un troisième métal qui est choisi dans le groupe constitué par Zn, Al, Sn, Be, Pb, Ga, V, In, Y, Sr et Ti ; **caractérisé en ce que** la composition atomique totale par rapport au Pt de X et de Y à la surface du catalyseur obtenu par corrosion sélective, telle que déterminée par la spectroscopie photoélectronique par rayons X, représente entre 20 et 99% de moins que la composition atomique totale par rapport au Pt de X et de Y dans la masse du catalyseur obtenu par corrosion sélective, la spectroscopie photoélectronique par rayons X utilisant un rayonnement monochromatisé K$\alpha$ d'aluminium d'une dimension de point de 650 $\mu$m.

2. Catalyseur obtenu par corrosion sélective selon la revendication 1, X représentant Ni ou Co.

3. Catalyseur obtenu par corrosion sélective selon la revendication 2, X représentant Ni.

4. Catalyseur obtenu par corrosion sélective selon l'une quelconque des revendications 1 à 3, Y représentant Zn, Al, V ou Ti.

5. Catalyseur obtenu par corrosion sélective selon la revendication 4, Y représentant Zn.

6. Catalyseur obtenu par corrosion sélective selon l'une quelconque revendication précédente, le pourcentage atomique total de X et de Y dans la masse étant de 20-70 pour cent en atome.

7. Catalyseur obtenu par corrosion sélective selon la revendication 6, le pourcentage atomique total de X et de Y dans la masse étant de 30-55 pour cent en atome.

8. Catalyseur obtenu par corrosion sélective selon l'une quelconque revendication précédente, la composition atomique totale par rapport au Pt de X et de Y à la surface représentant entre 45 et 75% de moins que la composition atomique totale par rapport au Pt de X et de Y dans la masse du catalyseur obtenu par corrosion sélective.

9. Procédé pour préparer un catalyseur obtenu par corrosion sélective de formule PtXY, dans laquelle X représente un deuxième métal qui est choisi dans le groupe constitué par Ni, Co et Cr ; et Y représente un troisième métal qui est choisi dans le groupe constitué par Zn, Al, Sn, Be, Pb, Ga, V, In, Y, Sr et Ti ; **caractérisé en ce que** la composition atomique totale par rapport au Pt de X et de Y à la surface du catalyseur obtenu par corrosion sélective, telle que déterminée par la spectroscopie photoélectronique par rayons X, représente entre 20 et 99% de moins que la composition atomique totale par rapport au Pt de X et de Y dans la masse du catalyseur obtenu par corrosion sélective, la spectroscopie photoélectronique par rayons X utilisant un rayonnement monochromatisé K$\alpha$ d'aluminium d'une dimension de point de 650 $\mu$m ; ledit procédé comprenant les étapes de :

(i) préparation d'un précurseur d'alliage catalytique de formule PtXY, le pourcentage atomique du total de X et de Y dans le précurseur d'alliage catalytique étant d'au moins 50 pour cent en atome ;
(ii) soumission du précurseur d'alliage catalytique à des conditions suffisantes pour lixivier une partie de X et/ou de Y du précurseur d'alliage catalytique pour obtenir le catalyseur obtenu par corrosion sélective.

10. Couche catalytique comprenant un catalyseur obtenu par corrosion sélective selon l'une quelconque des revendications 1 à 8 ou comprenant un catalyseur obtenu par corrosion sélective préparé selon la revendication 9.

11. Électrode à diffusion de gaz comprenant une couche de diffusion de gaz et une couche catalytique selon la revendication 10.

12. Membrane catalysée comprenant une membrane conduisant des protons et une couche catalytique selon la revendication 10.

13. Substrat de transfert catalysé comprenant un substrat de transfert et une couche catalytique selon la revendication 10.

14. Ensemble électrode à membrane, comprenant un catalyseur obtenu par corrosion sélective selon l'une quelconque des revendications 1 à 8, une couche catalytique selon la revendication 10, une électrode à diffusion de gaz selon la revendication 11 ou une membrane catalytique selon la revendication 12.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005020356 A

- WO 2013045894 A

**Non-patent literature cited in the description**

- Combinatorial screening for methanol oxidation catalysts in alloys of Pt, Cr, Co and V. *JOURNAL OF POWER SOURCES,* vol. 206, ISSN 0378-7753, 29-36

- **PER GASTEIGER et al.** *Applied Catalysis B: Environmental,* 2005, vol. 56, 9-35